Europäisches Patentamt

European Patent Office

Office européen des brevets

(19)

(11) EP 0 938 387 B1

(12) FASCICULE DE BREVET EUROPEEN

(45) Date de publication et mention
de la délivrance du brevet:
**19.06.2002 Bulletin 2002/25**

(21) Numéro de dépôt: **97947067.1**

(22) Date de dépôt: **14.11.1997**

(51) Int Cl.⁷: **B09B 3/00**, E01C 7/18

(86) Numéro de dépôt international:
**PCT/FR97/02055**

(87) Numéro de publication internationale:
**WO 98/22233 (28.05.1998 Gazette 1998/21)**

(54) **PROCEDE DE TRAITEMENT DES MACHEFERS POUR L'OBTENTION DE GRAVE-MOUSSE**

VERFAHREN ZUR BEHANDLUNG VON SCHLACKEN ZUR HERSTELLUNG VON
SCHAUMBITUMENKIES

METHOD FOR TREATING DROSS TO OBTAIN BITUMINOUS BASE COURSE

(84) Etats contractants désignés:
**ES FR GB**

(30) Priorité: **15.11.1996 FR 9613958**

(43) Date de publication de la demande:
**01.09.1999 Bulletin 1999/35**

(73) Titulaire: **Eurovia**
**92500 Rueil-Malmaison (FR)**

(72) Inventeurs:
• **BERREBI, Daniel**
**F-75116 Paris (FR)**
• **GOACOLOU, Honoré**
**F-78340 Les Clayes-sous-Bois (FR)**

(74) Mandataire: **Ahner, Francis**
**Cabinet Régimbeau**
**20, rue de Chazelles**
**75847 Paris cedex 17 (FR)**

(56) Documents cités:
EP-A- 0 550 303         DE-A- 2 200 462
DE-A- 4 425 281         FR-A- 2 553 125
LU-A- 88 471            US-A- 3 907 582

• J. GOUMANS ET AL.: "ENVIRONMENTAL
ASPECTS OF CONSTRUCTION WITH WASTE
MATERIALS" 1994 , ELSEVIER SCIENCE , NL
XP000480197 20870 voir page 239, ligne 1 - ligne
19

## Description

L'invention a pour objet un procédé de traitement des mâchefers, en vue de leur inertage et/ou de leur valorisation. Elle vise également la grave-mousse comprenant le mâchefer et son utilisation pour la réalisation de couches d'assise routières.

Dans tout le texte, les pourcentages indiqués sont des pourcentages en poids sec.

Dans tout le texte, on entend par grade x/y d'un bitume, la classe de dureté définie par un essai normalisé de pénétrabilité à l'aiguille selon la norme NF T66-004.

Lors de l'incinération des ordures ménagères, deux matériaux sont récupérés après l'incinération. On récupère, d'une part, les cendres d'épuration des fumées, dont la fraction soluble est très élevée. Ces cendres sont concentrées en produits polluants - chlorures et métaux lourds notamment - et de granulométrie fine. On récupère, d'autre part, le mâchefer d'incinération, matériau plus noble, de granulométrie équivalente à celle d'une grave après criblage, et pouvant être utilisé en technique routière.

Afin de le transformer en matériau routier, le mâchefer subit un traitement dans un centre autorisé, avec un double objectif. On souhaite rendre le matériau valorisable au titre de la réglementation concernant les mâchefers, définie par le Ministère de l'Environnement. On souhaite aussi donner au matériau les caractéristiques géotechniques appropriées.

Ce traitement est constitué des opérations suivantes :

- séparation des métaux ferreux,
- séparation des métaux non ferreux,
- criblage (obtention d'une granulométrie 0/20 mm),
- séparation des imbrûlés légers par tri aéraulique,
- maturation durant une période minimale de trois mois pendant laquelle le mâchefer se stabilise chimiquement (oxydation, carbonatation),
- traitement éventuel au liant hydraulique.

D'après la circulaire du Ministre de l'Environnement relative à l'Elimination des mâchefers d'incinération des résidus urbains, en date du 9 mai 1994, le mâchefer est classé en trois catégories, au vu de son comportement à la lixiviation :

- catégorie V : mâchefer à faible fraction lixiviable
    (teneurs inférieures au seuil 1),
- catégorie M : mâchefer intermédiaire
    (teneurs inférieures au seuil 2),
- catégorie S : mâchefer à forte fraction lixiviable
    (teneurs au moins supérieures au seuil 2).

Les paramètres mesurés permettant de classer le mâchefer dans ces différentes catégories sont les suivants : la fraction soluble, le mercure, le plomb, le cadmium, l'arsenic, le chrome VI, les sulfates, le carbone organique total, et la perte au feu.

Le tableau A suivant représente les différents seuils à respecter.

TABLEAU A

| TENEUR | UNITE | SEUIL 1 | SEUIL 2 |
|---|---|---|---|
| Fraction soluble | % | 5 | 10 |
| Hg | mg/kg | 0,2 | 0,4 |
| Pb | mg/kg | 10 | 50 |
| Cd | mg/kg | 1 | 2 |
| As | mg/kg | 2 | 4 |
| Cr VI | mg/kg | 1,5 | 3 |
| $SO_4^{2-}$ | mg/kg | 10000 | 15000 |
| COT | mg/kg | 1500 | 2000 |

TABLEAU A   (suite)

| TENEUR | UNITE | SEUIL 1 | SEUIL 2 |
|---|---|---|---|
| Perte au feu | % | 5 | 5 |

Les mâchefers à forte fraction lixiviable sont évacués en décharge classée.

Les mâchefers à faible fraction lixiviable peuvent être utilisés en technique routière.

Les mâchefers intermédiaires doivent être stabilisés, de façon à ramener leur fraction lixiviable en catégorie V, pour être utilisés en technique routière.

D'un point de vue géotechnique, le mâchefer élaboré mais non stabilisé se classe dans la catégorie F61 qui regroupe les sous-produits industriels, tels que les mâchefers d'incinération bien incinérés, criblés, déferraillés et stockés.

Les domaines et les conditions d'utilisation des mâchefers en travaux routiers sont aussi définis par la circulaire. Les mâchefers peuvent être utilisés en remblai, en couche de forme et en couche d'assise de chaussée et de parking.

Les modalités d'utilisation en remblai et en couche de forme sont précisées dans le guide technique de " Réalisation des remblais et des couches de forme ", du SETRA et du LCPC publié en septembre 1992, qui classe ce matériau en catégorie F6 ; en revanche, l'emploi en couche d'assise de chaussée n'a pas été codifié.

Le domaine d'emploi est assorti de restrictions liées en général à des risques de pollutions des eaux. En phase de construction, la mise en place des mâchefers doit être effectuée de façon à limiter les contacts avec les eaux météoriques, superficielles et souterraines, y compris pendant la période de mise en oeuvre.

Dans tous les cas, l'utilisation de mâchefer doit se faire en dehors des zones inondables et des périmètres de protection rapprochée des captages d'alimentation en eau potable, ainsi qu'à une distance minimale de 30 mètres de tout cours d'eau. Il conviendra de veiller à la mise en oeuvre de tels matériaux à une distance suffisante du niveau des plus hautes eaux connu. Enfin, le matériau ne doit pas servir pour le remblaiement de tranchées comportant des canalisations métalliques, car il existe des possibilités d'effet de pile.

L'utilisation des mâchefers en travaux d'aménagements s'est d'abord limitée à la réalisation de remblais, puis des réalisations routières, utilisant du mâchefer en sous-couches, ont vu le jour. C'est en essayant des utilisations en couches de base que les premiers problèmes dus à la nature particulière du produit sont apparus.

Dans le cas d'utilisation de mâchefer non traité, pour des réalisations qui ne nécessitent pas des portances élevées (parkings, trottoirs, voiries privées, etc.), le mâchefer pouvait a priori être utilisé en couches de base. Cependant, lors de la réalisation de chantiers expérimentaux avec différents mâchefers en couches de base recouvertes de 3 à 6 centimètres d'enrobé, des pathologies de chantier sont apparues au cours du premier été après leur réalisation.

Certains de ces chantiers expérimentaux font apparaître un léger gonflement de masse (1 à 2 pourcents) mis en évidence par des relevés altimétriques, ainsi que quelques gonflements localisés de faciès comparables à ceux causés par les racines d'arbres sur nos trottoirs (une à cinq gonfles pour 10 mètres carrés sur les chantiers présentant la pathologie).

L'utilisation de mâchefer traité au liant hydraulique permet d'élargir son champ d'application. A titre d'illustration, on pourra se reporter au brevet français FR 2 689 120 déposé par la Demanderesse.

L'objectif d'un traitement au liant hydraulique est double. En effet, l'expérience a montré que la maturation n'est pas, dans tous les cas, suffisante pour ramener le mâchefer "M" en catégorie "V" (cas d'une teneur élevée en sulfates). Ce traitement confère au mâchefer des résistances mécaniques plus importantes.

Le brevet US 3 907 582 décrit un procédé de traitement de mâchefer, destiné à assurer son inertage en vue de son utilisation en technique routière. Il implique le mélange du mâchefer avec du bitume et éventuellement de chaux, pour réaliser différentes couches de chaussée.

J. Goumans et al. : "Environmental Aspects of Construction with Waste Materials", 1994, Elsevier Science, NL ; page 239, décrit l'utilisation de mousse de bitume pour inerter des scories issues de la fabrication du zinc et en particulier immobiliser les particules de métaux lourds présentes, en vue de leur application en technique routière.

Le brevet FR 2 553 125 décrit enfin la préparation d'enrobés routiers faisant appel à de la mousse de bitume.

Dans le cadre de chantiers expérimentaux en couches de base traitées et recouvertes d'enrobés minces, on constate un développement de résistances mécaniques comparable à celui de graves traitées.

Cependant, certaines formules se dégradent et font état, dans la première année, de gonflements de surface localisés plus ou moins abondants. Ces gonflements sont de petite taille (10 centimètres de diamètre environ) et sont répartis uniformément sur toute la surface, leur densité au sol varie suivant les formules utilisées et peut atteindre quelques unités au mètre carré. L'évolution de ce phénomène dans le temps ne fait pas apparaître de gonflements de masse (les relevés altimétriques sont stables).

On a cherché à déterminer les origines des gonflements et le rôle de l'aluminium dans cet état de fait.

Suite à l'apparition de ces gonflements de surface, une campagne de carottage des couches concernées (couche de revêtement bitumineux et couche de base) a été entreprise.

Ces investigations ont abouti de manière systématique à la découverte d'une particule d'aluminium métal plus ou moins décomposée proche de l'interface du revêtement bitumineux. Ces particules d'aluminium sont toutes accompagnées d'une couronne de gels hydratés occupant le volume du gonflement.

Les analyses de ces gels, apparemment responsables des gonflements ponctuels, réalisées sur deux échantillons par minéralisation acide, donnent une composition majoritairement alumineuse.

Ainsi, on explique la pathologie des couches de base en mâchefer par la précipitation de composés à base d'aluminium consécutive à la baisse naturelle du pH.

Ces constatations conduisent à proposer la modélisation de ces phénomènes, en trois étapes :

1) dissolution des particules d'aluminium métal en ions $AlO_2$- à pH élevé,

2) baisse du pH avec le temps par carbonatation de la chaux par le gaz carbonique atmosphérique et celui produit à l'intérieur de la matrice par oxydation des imbrûlés résiduels,

3) reprécipitation des ions $AlO_2$- en $Al(OH)_3$ (composé solide hygroscopique) qui s'accompagne d'une augmentation de volume si la pression des couches supérieures est faible.

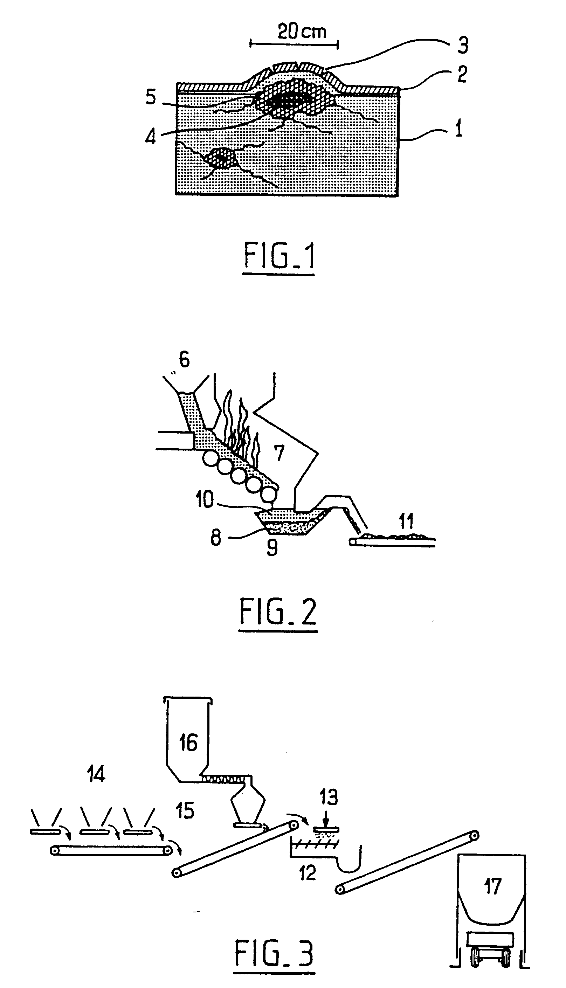

La figure 1 représente une coupe schématique d'une structure à base de mâchefer traité au liant hydraulique, sous-jacente à un gonflement.

Cette figure montre le gonflement local et superficiel d'une structure routière dont la couche d'assise 1 est formée par un mélange de mâchefer traité au liant hydraulique. Cette couche d'assise est recouverte d'une couche de bitume 2, juste en dessous de laquelle se trouve une particule d'aluminium métal 4. Cette dernière est accompagnée d'une couronne de gels hydratés 5 occupant le volume du gonflement. On observe un craquèlement du revêtement bitumineux 2 matérialisé par des fissures 3.

Il existe donc un besoin de trouver un procédé d'obtention d'un matériau maniable dans le temps, stable en place et qui ne doit pas, à terme, présenter de fissuration.

Pour rester économique, le procédé ne doit pas être sophistiqué et doit être compatible avec les moyens de production (fabrication dans une centrale de graves traitées). Il doit pouvoir, en outre, être mis en oeuvre à la niveleuse ou au finisseur et doit utiliser un bitume pur qui n'aura subi aucune transformation, contrairement, par exemple, au traitement à l'émulsion.

on y parvient, selon l'invention, au moyen d'un procédé de traitement des mâchefers, en vue de son inertage et/ou de l'amélioration de ses propriétés mécaniques, dans lequel on mélange intimement, notamment par malaxage, le mâchefer avec de la mousse de bitume, afin de former une grave-mousse.

Sur le plan géotechnique, le mâchefer présente une sensibilité à l'eau relativement faible qui se traduit par un niveau de portance élevé sur une large plage de teneur en eau. On a mesuré un Indice Portant Immédiat supérieur à 100 sur une plage de teneur en eau de 3 à 4 %.

A titre d'illustration, la figure 2 représente un four d'incinération d'ordures ménagères conduisant à la production de mâchefer. Des ordures ménagères 6 sont introduites dans le four d'incinération 7. On recueille le mâchefer 8 à la base du four 7 dans un extracteur 9 où il est mis en contact avec de l'eau 10. En final, le mâchefer subit une extraction humide. Il se présente sous la forme d'un matériau noirâtre 11 comportant des éléments de grosse taille, tels que des ferrailles.

La figure 3 représente un schéma de principe d'une centrale de fabrication de grave-mousse.

La mousse de bitume est obtenue dans un malaxeur 12 par injection de très faibles quantités d'eau et d'agent moussant dans le bitume par l'intermédiaire d'une chambre de mélange.

A cet effet, une rampe 13 est disposée au-dessus du malaxeur.

Plusieurs trémies doseuses 14 sont mises en oeuvre, à partir desquelles le mâchefer peut subir un dopage 15 avant d'arriver dans le malaxeur 12. Par ailleurs, on pilote l'arrivée d'un additif pulvérulent avantageusement choisi parmi la chaux vive, la chaux éteinte, des fines calcaires, ainsi que leurs mélanges, dans le malaxeur à partir d'un silo correspondant. Un poste de chargement 17 est mis en place à la fin du procédé, afin de permettre le transport de la grave-mousse par camions.

De préférence, on réalise le mélange en incorporant de la mousse de bitume, dont la température est comprise entre 140 et 190°C, dans du mâchefer 8 dont la température est voisine de la température ambiante.

Cette technique consiste à incorporer du bitume chaud sous forme de mousse dans des granulats non chauffés.

La fabrication de la grave-mousse peut être réalisée dans une centrale de fabrication de matériaux traités aux liants hydrauliques. A ce matériel usuel, viennent s'ajouter :

. une citerne de bitume routière,

- une plate-forme de fabrication de la mousse, et
- une rampe de pulvérisation installée sur le malaxeur.

La mousse de bitume est obtenue, par exemple, par injection de très faibles quantités d'eau et d'agents moussants dans le bitume par l'intermédiaire d'une chambre de mélange.

L'eau additivée se vaporise instantanément au contact du bitume chaud, et génère la mousse qui se révèle après passage dans un diffuseur pour obtenir un jet conique plein. Les études de laboratoire sur la formation de la mousse ont montré un taux d'expansion important, voisin de 10, mais aussi une durée de vie brève qu'il faut mettre à profit pour la répartir d'une manière la plus homogène possible dans le matériau.

A cet effet, une rampe peut être disposée au-dessus du malaxeur. Elle comporte un nombre de jets important qui permet de répartir au mieux la mousse dans le matériau.

Elle peut s'adapter à toutes les dimensions de malaxeurs, et les jets ont un angle de diffusion et une géométrie optimisés.

Les différents constituants (bitume, eau et additifs) sont introduits, par exemple, à l'aide de pompes doseuses et contrôlés par des débitmètres, l'un d'eux étant de type massique pour le dosage du bitume.

Les commandes des moteurs et des vannes de la plate-forme sont regroupées, en général, sur un pupitre mobile installé dans la cabine de commande de la centrale de fabrication de graves.

Afin d'effectuer le collage du bitume sur les gros éléments du matériau, un dope d'adhésivité peut être pulvérisé sur le gravillon.

L'installation de la citerne, de la plate-forme et de la rampe sur le malaxeur nécessite environ une journée de travail.

La plupart du temps, la grave-mousse est transportée par camions bâchés pour lui conserver sa teneur en eau. Elle est répandue à la niveleuse ou au finisseur et compactée à l'aide d'un atelier classique, comprenant un compacteur vibrant et un compacteur à pneus. Comme pour tout matériau bitumineux, il faut prévoir, en général, une couche d'accrochage avant la mise en oeuvre de la grave-mousse.

Le matériau, très maniable, ne présente pas de problème de mise en oeuvre. Contrairement à la plupart des matériaux bitumineux, la grave-mousse présente un très long délai de mise en oeuvre, vingt-quatre à quarante-huit heures, voire plus. Néanmoins, elle peut être mise sous circulation immédiatement.

En attendant la couche de roulement définitive (enduits superficiels, enrobés minces, enrobés coulés à froid, et plus généralement tous types d'enrobés), un enduit de scellement gravillonné peut être mis en place (émulsion et gravillon 4/6). Cet enduit a éventuellement deux fonctions :

- maintenir les conditions hygrométriques de la grave-mousse le temps du mûrissement,
- protéger la surface au moment de la mise en circulation (le soir et le week-end).

Avantageusement, on réalise le mélange en mettant en oeuvre la mousse de bitume dans une proportion relative en poids de bitume, comprise entre 2 et 9 %, et de préférence comprise entre 3 et 6 %.

L'intérêt de tels mélanges est double :

- l'association avec des granulats de roches dures permet de satisfaire aux exigences demandées pour certaines utilisations,
- l'association avec une grave pauvre en fines et donc inutilisable en l'état, permet sa valorisation sans compromettre les performances du mélange, bien au contraire.

Les constituants de la grave-mousse peuvent être de trois ordres.

Les granulats sont constitués par du mâchefer seul ou en mélange avec des granulats naturels. Le liant utilisé est en général un bitume pur ou modifié, éventuellement fluxé à partir d'une huile de houille ou de pétrole, de grade 10/20 jusqu'à 180/220, si possible d'origine vénézuélienne pour son aptitude au moussage et sa bonne adhésivité vis-à-vis des granulats.

De la chaux hydratée est ajoutée, par exemple au mélange pour hydrophober les granulats. Pour certains agrégats naturels, notamment silico-calcaires, la présence d'un dope d'adhésivité peut s'avérer nécessaire.

Des agents moussants et stabilisants peuvent également être utilisés, pour l'obtention de la mousse et la maîtrise de sa qualité.

Avantageusement, on ajoute des granulats naturels choisis dans le groupe comprenant le sable naturel, les roches naturelles concassées, et le béton de démolition concassé ; ces granulats naturels étant ajoutés au mélange dans une proportion relative en poids comprise entre 0 et 90 %, et de préférence comprise entre 30 et 60 %.

Tout sable naturel peut être utilisé dans la mesure où il satisfait au critère de propreté édicté par la norme NF P18-597 et applicable aux matériaux d'assise de chaussées.

On peut en outre faire appel à tout béton de démolition concassé utilisable en technique routière.

D'une manière générale, l'étude de formulation de la grave-mousse s'apparente à celle d'une grave-émulsion (norme NF P98-121).

Les compositions retenues présentent une couche granulométrique proche de celle d'une grave reconstituée_ humidifiée (GRH), i.e. une courbe pleine qui présente de bonnes caractéristiques de comportement à court terme (bon Indice Portant Immédiat).

La granularité peut être de type 0/10, 0/14 ou 0/20 selon l'épaisseur de mise en oeuvre prévue.

Avantageusement, on ajoute au mélange un additif pulvérulent avantageusement choisi parmi la chaux vive, la chaux éteinte, des fines calcaires, ainsi que leurs mélanges, dans une proportion relative en poids inférieure à environ 10 %, et de préférence comprise entre 0,5 et 3 %, et éventuellement de l'eau de manière à respecter une teneur appropriée en eau.

Plus avantageusement, on ajoute au mélange des additifs supplémentaires choisis dans le groupe comprenant les dopes d'adhésivité, et les agents moussants, ceux-ci pouvant être ajoutés jusqu'à une proportion relative en poids d'environ 5‰, et de préférence inférieure à environ 2‰.

De préférence, on fait passer le mâchefer 8 dans un séparateur à courants de Foucault, afin d'enlever l'aluminium, et ceci préalablement à la mise en oeuvre du mâchefer dans le mélange.

Plus préférentiellement, le mâchefer 8 mis en oeuvre a subi, en outre, un traitement de déferraillage, notamment par tri magnétique et/ou un traitement de criblage dans un tamis de maille de taille inférieure à environ 50 mm, et plus préférentiellement voisine de 30 mm.

L'élaboration préalable du mâchefer va au-delà de la simple préparation usuelle du mâchefer. Le déferraillage plus poussé a lieu en plusieurs étapes, grâce à une succession de "poulies" magnétiques en particulier. Le criblage permet d'obtenir une grave 0/20 correctement graduée s'inscrivant dans le fuseau des graves non traitées spécifié par la norme NF P98-129.

Des traitements complémentaires permettent d'affiner le matériau en enlevant les éléments indésirables :

- . les imbrûlés papiers et plastiques sont éliminés par soufflage,
- . les métaux non ferreux et tout particulièrement l'aluminium sont retirés par passage dans un séparateur à courants de Foucault.

Plus préférentiellement encore, on stocke le mâchefer 8, de préférence après traitement d'élimination des métaux, pendant environ trois mois, avant de le mettre en oeuvre dans le mélange.

La grave-mousse susceptible d'être obtenue conformément au procédé selon l'invention peut être utilisée pour la réalisation d'une couche d'assise, en particulier, pour la réalisation d'une couche de fondation ou d'une couche de base de chaussées neuves, notamment, à faible et moyen trafic, ou pour le renforcement de chaussées à réhabiliter.

L'invention pourra être mieux comprise à l'aide des exemples non limitatifs qui suivent et qui constituent des modes de mise en oeuvre préférentiels du procédé selon l'invention.

Exemple 1

1) Objectif

Les performances mécaniques de graves-mousse sont établies, comme pour les graves-émulsion, à partir de :

- l'essai Duriez (NF P98-251-4), et
- l'essai à la presse à cisaillement giratoire (PCG) (NF P98-252).
    La grave-mousse est élaborée dans un malaxeur de laboratoire dans lequel la mousse de bitume, fabriquée à partir d'un banc de mousse spécialement conçu pour cette technique, est incorporée aux granulats.
    Les performances minimales visées sont :
- pourcentage de vides Duriez : inférieur ou égal à quatorze pourcents,
- résistance à la compression sans immersion $R_c$ supérieure ou égale à 3,5 MPa,
- rapport $r_c/R_c$ supérieur ou égal à 0,55, $r_c$ étant la résistance à la compression après conservation dans l'eau ;
- pourcentage de vides à l'essai PCG : à 10 girations, inférieur ou égal à 23 % ; à 200 girations, inférieur ou égal à 15 %.

L'essai PCG permet de prévoir la compactibilité d'un matériau et sa densité sur chantier (NFG P98-252).

2) Etude préliminaire sur un mélange de mâchefer et de mousse de bitume

Une étude préliminaire a permis de fixer la teneur en bitume à 4 %. Les résultats de cette étude, présentés ci-après, montrent une faible sensibilité à la teneur en eau et, dans tous les cas, un comportement mécanique très satisfaisant au regard des spécifications de la norme NF P98-121 relative à la grave-émulsion et qui servent de référence pour les graves traitées à la mousse de bitume. On rapporte dans le tableau I ci-après les diverses compositions mises en oeuvre.

## TABLEAU I

| Mâchefer (%) | 98 | 98 | 98 | 98 | |
|---|---|---|---|---|---|
| Chaux (%) | 2 | 2 | 2 | 2 | |
| Teneur en bitume (ppc) | 3,5 | 3,5 | 4,5 | 4,5 | |
| Teneur en eau (%) | 13,5 | 17 | 13,5 | 17 | |
| DURIEZ $R_C$ air (MPa) | 3,34 | 3,57 | 4,21 | 3,73 | > 3 (*) |
| $r_C$ eau (MPa) | 2,47 | 2,66 | 2,45 | 2,68 | |
| tenue à l'eau : $r_C/R_C$ | 0,74 | 0,75 | 0,58 | 0,72 | > 0,55 (*) |

(*)  Spécification de la norme NF P98-121, c'est-à-dire grave émulsion de type 2.

On obtient dans la plupart des cas :

$$R_c \geq 3,5 \text{ MPa}$$

$$r_c/R_c \geq 0,55.$$

Par conséquent, les objectifs fixés au départ sont effectivement atteints.

3) Optimisation de la composition

Les résultats du tableau II ci-après montrent la forte incidence de la teneur en chaux. On compare les caractéristiques mécaniques de deux compositions.

La teneur minimale est de 1 % en chaux.

### TABLEAU II

| COMPOSITION | 1 | 2 | |
|---|---|---|---|
| Mâchefer de MASSY (%) | 98 | 98 | |
| Chaux hydratée (%) | 2 | 1 | |
| Fines calcaires (%) | - | 1 | |
| Teneur en eau (%) | 13,5 | 13,5 | |
| Bitume 70/100 (ppc) | 4,0 | 4,0 | |
| Module de richesse | 2,34 | 2,34 | |
| CARACTERISTIQUES MECANIQUES | | | |
| $R_c$ air (MPa) | 4,38 | 3,53 | > 3 (*) |
| $r_c$ eau (MPa) | 2,97 | 2,02 | |
| Tenue à l'eau : $r_c/R_c$ | 0,68 | 0,57 | > 0,55 (*) |

(*) Spécification de la norme NF P98-121 (grave émulsion de type 2).

Là encore, on obtient :

$$R_c \geq 3,5 \text{ MPa}$$

$$r_c/R_c \geq 0,55.$$

Par conséquent, les objectifs fixés au départ sont effectivement atteints. On remarque une amélioration de la valeur de $R_c$ en utilisant de la chaux hydratée.

4) Performances des formules mixtes à base de mâchefer

Deux formules mixtes (-mélanges de mâchefer et de granulats naturels) ont été testées. L'une comprend 50 % de mâchefer et 50 % de grès-quartzite. L'autre comprend 50 % de mâchefer et 50 % de calcaire.
Les performances de ces formules, conformes aux spécifications de la norme NF P98-121, ne sont pas significativement différentes de celles de la formule avec du mâchefer seul.
Ces performances sont indiquées dans le tableau III ci-après.

**EP 0 938 387 B1**

### TABLEAU III

| COMPOSITION | | | |
|---|---|---|---|
| Mâchefer de MASSY (%) | 98 | 49 | 49 |
| 10/20 Grès-quartzite (%) | - | 30 | - |
| 0/4 Grès-quartzite (%) | - | 20 | - |
| 10/20 calcaire (%) | - | - | 30 |
| 0/4 calcaire (%) | - | - | 20 |
| Chaux hydratée (%) | 1 | 1 | 1 |
| Fines calcaires (%) | 1 | - | - |
| Teneur en eau (%) | 13,5 | 8,5 | 8,5 |
| Bitume 70/100 (ppc) | 4,0 | 4,0 | 4,0 |
| Module de richesse | 2,34 | 2,43 | 2,48 |
| CARACTERISTIQUES MECANIQUES | | | |
| $R_c$ air (MPa) | 3,53 | 3,72 | 3,58 |
| $r_c$ eau (MPa) | 2,02 | 2,50 | 2,56 |
| Tenue à l'eau : $r_c/R_c$ | 0,57 | 0,67 | 0,72 |

On obtient à nouveau :

$$R_c \geq 3,5 \text{ MPa}$$

$$r_c/R_c \geq 0,55.$$

Par conséquent, les objectifs fixés au départ sont effectivement atteints.

Exemple 2

On réalise diverses planches d'essais.

2.1 Le site

Des planches d'essais ont été réalisées en juin 1995 sur la route d'accès à une centrale d'enrobage de la Demanderesse. Cette route subit un trafic de véhicules poids lourds transportant les agrégats et les enrobés. Il s'agit d'un trafic de classe T3, c'est-à-dire entre 50 et 150 poids lourds par jour.

2.2 Formules testées

On réalise plusieurs formules rapportées ci-après.
Les cinq formules approximatives suivantes a), b), c), d) et e) ont été mises en oeuvre :

a) 98 % mâchefer + 2 % additif pulvérulent (*) + 4 ppc bitume 70/100.
b) 50 % mâchefer + 49 % calcaire dur + 1 % chaux + 4 ppc bitume 70/100.
c) 50 % mâchefer + 35 % grave de mer + 14 % aérofall + 1 % chaux + 4 ppc bitume 70/100.
d) 50 % mâchefer + 48 % grès quartzite + 2 % additif pulvérulent (*)  + 4 ppc bitume 70/100.
e) Grave-mousse de référence (silico-calcaire) : 99 % grave de mer + 1 % chaux + 4 ppc bitume 70/100.

2.3 Epaisseur de la couverture bitumineuse

Deux épaisseurs ont été prévues concernant la couche bitumineuse, à savoir 6 et 10 centimètres. La couche de base a une épaisseur de 16 et 12 centimètres. L'épaisseur totale est constante et égale à 22 centimètres.

2.4 Disposition des planches

Les planches ont été construites de la manière suivante :

- Réalisation de cinq planches de 25 mètres de long sur 6 mètres de large en 16 centimètres d'épaisseur en couche de base,
- Décaissement d'une demi-chaussée (3 mètres) sur une profondeur de 4 centimètres,
- Réalisation d'une couche de liaison en enrobé en 4 centimètres sur la demi-chaussée dérasée,
- Réalisation d'une couche de roulement en 6 centimètres en pleine largeur.

On note qu'une couche d'accrochage a été réalisée sur le support actuel et une couche de scellement sur la couche de base en attendant la mise en oeuvre des couches d'enrobés.
Ces planches d'essais ont fait l'objet d'un suivi détaillé et d'un bilan après seize mois de service dont deux périodes d'étés, celles-ci étant pourtant propices au développement des gonfles lorsqu'un risque potentiel de ce type existe.

2.5 Le suivi

Le suivi a porté sur des mesures de déflexion, des carottages, du nivellement et des relevés visuels.

a) Mesures de déflexion
Elles ont été réalisées :

- sur le support avant la mise en oeuvre des matériaux,
- sur le revêtement de la chaussée juste après sa réalisation, et
- sur le revêtement après une année de service.

Les résultats sont regroupés dans le tableau IV ci-après.

TABLEAU IV

| Période | Avant travaux | Après travaux | Après 1 an de service |
|---|---|---|---|
| Déflexion moyenne (1/100 mm) | 218 | 99 | 76 |
| Atténuation | 1 | 0,45 | 0,35 |

La réduction de la déflexion traduit le pouvoir structurel du mâchefer traité à la mousse de bitume et son mûrissement dans le temps qui se traduit spécialement par une rigidification du matériau sous l'effet du trafic. Le pouvoir structurel est très comparable à celui des graves-mousse fabriquées à partir de granulats naturels.
b) Carottages
Cinq mois après la mise en oeuvre, les matériaux ont pu être carottés. Les carottes prélevées dans la planche "tout mâchefer" sont entières et démontrent ainsi un niveau de cohésion relativement élevé du matériau. Il s'agit là d'un avantage notable.
c) Relevés visuels
Les relevés visuels réalisés régulièrement n'ont pas mis en évidence de désordres de quelque ordre que ce soit de l'orniérage, de la fissuration ou du gonflement. Il s'agit là encore d'un avantage notable.
d) Mesures de nivellement
Des relevés topographiques réalisés juste après la mise en oeuvre, à un an et à quinze mois n'ont pas mis en évidence de gonflement de masse. Il s'agit là encore d'un avantage notable.

(*) additif pulvérulent = chaux + fines calcaires (50-50).
"Aérofall" signifie résidus de cimenterie.
Nota :Le mâchefer a été élaboré conformément à la procédure indiquée précédemment.

2.6 Planches complémentaires

En mai 1996, de nouvelles planches ont été réalisées. Elles ont pour objectif de caractériser le comportement d'un mâchefer traité à la mousse de bitume n'ayant pas fait l'objet d'une opération de désaluminage. Elles ont aussi pour objectif de tester des couvertures bitumineuses de faible épaisseur qui n'avaient pas été prévues sur les premières planches. On relève 6 centimètres d'enrobés et un enduit bicouche.

Les premières constatations, après une première période d'été, ont montré l'absence de gonfle, quel que soit le revêtement.

## CARACTERISTIQUES ENVIRONNEMENTALES DE LA GRAVE-MOUSSE

Le traitement du mâchefer à la mousse de bitume a un effet bénéfique sur le risque de migration des éléments polluants vers le milieu naturel.

Le test de lixiviation X 31-210 est une procédure normalisée qui permet de quantifier ce risque. Ce test consiste, après avoir fait séjourner le matériau dans de l'eau pure, à mesurer les quantités de matières polluantes ayant migré dans l'eau. Les résultats de ce test pratiqué sur du mâchefer non traité et du mâchefer traité sont donnés dans le tableau V ci-après :

TABLEAU V

| ANALYSES | Mâchefer seul | Mâchefer traité à la mousse de bitume | Atténuation |
|---|---|---|---|
| Fraction soluble | 2,29 % | 1,24 % | 0,55 |
| Teneur en mg/kg : COT | 482 | 272,3 | 0,56 |
| Chrome hexavalent | 0,27 | 0,15 | 0,55 |
| Sulfates | 2077 | 1205 | 0,58 |
| Mercure | 0,03 | 0,03 | (*) |
| Plomb | 0,03 | 0,03 | (*) |
| Cadmium | 0,06 | 0,03 | (*) |
| Arsenic | 0,03 | 0,03 | (*) |

(*) Teneur initialement très faible, le rapport n'est pas significatif.

Le traitement à la mousse de bitume permet de réduire de manière très significative la migration des polluants. Au plan réglementaire, ce traitement permet une valorisation des mâchefers de la catégorie "M" intermédiaire en les faisant passer en catégorie "V". En effet, les valeurs seuils de ces deux catégories sont, à une exception près, dans un rapport inférieur ou égal à 2. On note que ce changement de classe par un traitement aux liants hydrauliques est aussi possible, mais il n'a pas un caractère aussi systématique dans la mesure où le phénomène de prise ne se développe pas avec tous les mâchefers.

## COMPARAISON AVEC D'AUTRES TECHNIQUES DE TRAITEMENT AU BITUME :

Le procédé de traitement à la mousse de bitume a été comparé à deux autres techniques couramment utilisées pour fabriquer les enrobés bitumineux, à savoir :

. l'enrobage à chaud (grave-bitume),
. l'enrobage à froid à l'aide d'une émulsion de bitume (grave-émulsion).

Ces trois techniques ont été comparées lorsqu'elles sont appliquées à des granulats naturels, d'une part, et à du mâchefer, d'autre part.

Les six formules testées sont données dans les tableaux VI et VII ci-après.

Tableau VI :

| formules à base de mâchefer | | | |
|---|---|---|---|
| Formule | Grave-bitume | Grave-émulsion | Grave-mousse |
| Mâcheferde Massy (*) (%) | 100 | 100 | 98 |
| Chaux hydratée (%) | -- | -- | 1 |
| Fines calcaires (%) | -- | -- | 1 |
| Bitume résiduel (ppc) | 4,20 | 4,02 | 3,31 |
| Module de richesse | 2,52 | 2,42 | 1,80 |

(*) N'ayant pas subi l'opération de désaluminage.

Tableau VII :

| formules à base de granulats naturels | | | |
|---|---|---|---|
| Formule | Grave-bitume | Grave-émulsion | Grave-mousse |
| 10/14 Grès-quartzite (%) | 20 | 26 | 26 |
| 4/10 Grès-quartzite (%) | 30 | 35 | 25 |
| 0/4 Grès-quartzite (%) | 49 | 49 | 48 |
| Fines calcaires (%) | 1 | -- | -- |
| Chaux hydratée (%) | -- | -- | 1 |
| Bitume résiduel (ppc) | 4,20 | 3,50 | 3,57 |
| Module de richesse | 2,52 | 2,12 | 2,13 |

Les résultats obtenus sur ces six formules sont présentés dans le tableau VIII récapitulatif suivant :

TABLEAU VIII

| MATERIAUX | MACHEFER | | | GRANULATS NATURELS | | |
|---|---|---|---|---|---|---|
| TYPE | Grave-bitume | Grave-émulsion | Grave mousse | Grave-bitume | Grave-émulsion | Grave mousse |
| Bitume résiduel (ppc) | 4,20 | 4,02 | 3,31 | 4,20 | 3,50 | 3,57 |
| Module de richesse | 2,52 | 2,42 | 1,80 | 2,52 | 2,12 | 2,13 |
| Résistances à la compression (MPa) | | | | | | |
| - Rc air | 2,6 | 3,6 | 4,05 | 5,7 | 5,1 | 4,1 |
| - rc eau | 0,4 | 2,3 | 2,26 | 4,0 | 3,2 | 2,63 |
| Tenue à l'eau (rc/Rc) | 0,15 | 0,64 | 0,56 | 0,70 | 0,63 | 0,64 |

L'analyse de ces résultats montre :

1. que la technique d'enrobage à chaud ne permet pas d'obtenir des résultats satisfaisants avec le mâchefer. La résistance à la compression est divisée par plus de 2 (2,19) et la tenue à l'eau est très insuffisante (0,15 pour 0,65 exigé par la norme NF P98-138 sur la grave bitume) ;

2. que, si la technique d'enrobage à l'émulsion donne des résultats passables sur le mâchefer, ces valeurs sont bien en dessous des valeurs obtenues avec des granulats naturels. La résistance en compression est réduite de 40 % par exemple ;

3. seule, la technique de traitement à la mousse de bitume permet d'obtenir sur les deux types de matériaux des résultats comparables (résistance en compression : 4,05 et 4,1 MPa - tenue à l'eau : 0,56 et 0,64). La tenue à

EP 0 938 387 B1

l'eau, légèrement plus faible dans le cas du mâchefer, peut être ajustée par une légère augmentation de la teneur en chaux.

Un test de stabilité dimensionnelle a montré des différences significatives entre le traitement à l'émulsion et le traitement à la mousse de bitume lorsque le mâchefer n'a pas été désaluminé. En effet, le graphique ci-après indique des gonflements à vingt-huit jours de l'ordre de 1 % - ce qui reste admissible - pour le traitement à la mousse de bitume, et de plus de 2 % pour la technique à l'émulsion.

**DOMAINE D'EMPLOI DU MACHEFER TRAITE A LA MOUSSE DE BITUME.**

On mesure la résistance du mâchefer traité à la mousse de bitume pour des trafics faibles et moyens (T4 à T1). Le mâchefer traité à la mousse de bitume est un matériau utilisable en couche de fondation et en couche de base de chaussées neuves essentiellement selon les règles définies dans le tableau IX ci-après :

TABLEAU IX

| Trafic Couche | inférieur ou égal à T3 | T2 | T1 |
|---|---|---|---|
| Roulement (minimum) | enduit bicouche | 6 cm BB | 2 cm BB |
| Liaison (minimum) | -- | -- | 6 cm BB |
| Base | Mâchefer seul (*) | Mâchefer seul (*) | Mâchefer+ granulats naturels (**) |
| Fondation | Mâchefer seul (*) | Mâchefer seul (*) | Mâchefer seul (*) |

BB : Béton bitumineux (*) Mâchefer traité à la mousse de bitume, sans granulats naturels,

(**) Mâchefer traité à la mousse de bitume, comportant environ 50 % de granulats naturels.
T1 correspond à : 300 à 750 poids lourds/jour.
T2 corresoond à : 150 à 300 poids lourds/jour.

Le renforcement de chaussée est le second domaine d'emploi du produit. Les règles à respecter sont aussi celles définies pour les chaussées neuves.

Il en résulte que le traitement des mâchefers à la mousse de bitume présente des atouts spécifiques pour une meilleure valorisation des mâchefers.

Au plan environnemental, le traitement à la mousse de bitume ralentit de manière notable la migration des produits polluants vers le milieu naturel. De ce fait, le procédé conforme à l'invention permet l'utilisation de mâchefers plus fortement concentrés en éléments indésirables (mâchefers de classe "M") et réduit encore l'impact sur l'environnement des mâchefers de classe V.

Au plan géotechnique, parmi les techniques de traitement au bitume (à chaud, à froid sous forme d'émulsion, etc.), la mousse de bitume est la mieux adaptée aux mâchefers, pour deux raisons essentielles. D'abord, il n'y a pas de chute des résistances mécaniques avec le mâchefer par rapport aux granulats naturels, contrairement à ce qui se produit avec les autres techniques. Ensuite, le mâchefer non séparé de son aluminium est nettement moins sensible aux phénomènes de gonflements.

On peut aussi maîtriser les risques de gonflement. Le comportement visco-élastique du matériau permet des gonflements localisés sans fissuration de la structure, donc sans affaiblir le pouvoir structurant du matériau. Par ailleurs, les phénomènes d'autoréparation sous trafic, constatés sur les enrobés, constituent, en cas de gonflements, un atout supplémentaire pour la technique.

Ces propriétés font du mâchefer traité à la mousse de bitume un matériau utilisable en couche de fondation et en couche de base de chaussées à faible et moyen trafic.

**Revendications**

1. Procédé de traitement de mâchefer (8), en vue de son inertage et/ou de l'amélioration de ses propriétés mécaniques par mélange intime, notamment par malaxage (12), de mâchefer (8), de bitume et d'un additif pulvérulent choisi parmi la chaux vive et la chaux éteinte, **caractérisé en ce que** le bitume est ajouté sous forme de mousse de bitume afin de former une grave-mousse, et **en ce qu'**on fait passer le mâchefer (8) dans un séparateur à courants de Foucault, afin d'enlever l'aluminium, et ceci préalablement à la mise en oeuvre du mâchefer dans le mélange.

**2.** Procédé selon la revendication 1, **caractérisé par le fait que** le bitume utilisé pour la fabrication de la mousse de bitume est un bitume pur ou modifié, éventuellement fluxé à partir d'une huille de houille ou de pétrole, de grade allant de 10/20 jusqu'à 180/220.

**3.** Procédé selon l'une des revendications 1 et 2, **caractérisé par le fait qu'**on réalise le mélange en incorporant de la mousse de bitume, dont la température est comprise entre 140 et 190°C, dans du mâchefer (8) dont la température est voisine de la température ambiante;

**4.** Procédé selon l'une quelconque des revendications précédentes, **caractérisé par le fait qu'**on réalise le mélange en mettant en oeuvre la mousse de bitume dans une proportion relative en poids de bitume, comprise entre 2 et 9%, et de préférence comprise entre 3 et 6% du mélange mâchefer / mousse de bitume.

**5.** Procédé selon l'une quelconque des revendications précédentes, **caractérisé en ce que** la chaux est ajoutée dans une proportion relative en poids inférieure à environ 10 %, et de préférence comprise entre 0,5 et 3% du mélange mâchefer/mousse de bitume.

**6.** Procédé selon l'une quelconque des revendications précédentes, **caractérisé par le fait qu'**on ajoute, en outre, des granulats naturels choisis dans le groupe comprenant le sable naturel, les roches naturelles concassées, et le béton de démolition concassé ; ces granulats naturels étant ajoutés au mélange dans une proportion relative en poids comprise entre 0 et 90 %, et de préférence comprise entre 30 et 60 %.

**7.** Procédé selon l'une quelconque des revendications précédentes, **caractérisé par le fait qu'**on ajoute au mélange des additifs supplémentaires choisis dans le groupe comprenant les dopes d'adhésivité, et les agents moussants, ceux-ci pouvant être ajoutés jusqu'à une proportion relative en poids d'environ 5‰, et de préférence inférieure à environ 2‰.

**8.** Procédé selon l'une quelconque des revendications précédentes, **caractérisé par le fait que** le mâchefer (8) mis en oeuvre a subi, en outre, un traitement de déferraillage, notamment par tri magnétique et/ou un traitement de criblage dans un tamis de maille de taille inférieure à environ 50 mm et de préférence voisine de 30 mm.

**9.** Procédé selon l'une quelconque des revendications précédentes, **caractérisé par le fait qu'**on stocke le mâchefer (8), de préférence après traitement d'élimination des métaux, pendant environ trois mois, avant de le mettre en oeuvre dans le mélange.

**Patentansprüche**

**1.** Verfahren für die Behandlung von Schlacke (8) im Hinblick auf ihre Dimensionsstabilität und/oder die Verbesserung ihrer mechanischen Eigenschaften mittels inniger Vermischung, und insbesondere durch Verknetung (12) der Schlacke (8) mit Bitumen und einem pulverförmigen Zusatzstoff, welcher aus ungelöschtem Kalk und gelöschtem Kalk besteht,
**dadurch gekennzeichnet, dass**
das Bitumen in Form von Bitumenschaum beigegeben wird, um einen Schlackenschotter herzustellen, und dadurch, dass die Schlacke (8) durch einen Wirbelstromabscheider geleitet wird, um das Aluminium vor der Beigabe der Schlacke in das Gemisch zu entfernen.

**2.** Verfahren nach Anspruch 1,
**dadurch gekennzeichnet, dass**
das für die Herstellung des Bitumenschaums verwendete Bitumen ein reines oder modifiziertes Bitumen ist, das eventuell aus einem Steinkohleöl oder einem Erdöl in einem Grad zwischen 10/20 und 180/220 gefluxt wird.

**3.** Verfahren nach einem der Ansprüche 1 oder 2,
**dadurch gekennzeichnet, dass**
das Gemisch dadurch hergestellt wird, dass Bitumenschaum, dessen Temperatur zwischen 140 und 190° C liegt, in die Schlacke (8), deren Temperatur in etwa der Umgebungstemperatur entspricht, eingegeben wird.

**4.** Verfahren nach einem der vorausgegangenen Ansprüche,
**dadurch gekennzeichnet, dass**

das Gemisch dadurch hergestellt wird, dass der Bitumenschaum in einem relativen Gewichtsverhältnis des Bitumens beigegeben wird, das zwischen 2 und 9%, und vorzugsweise zwischen 3 und 6% des Gemischs aus Schlakke/Bitumenschaum liegt.

5. Verfahren nach einem der vorausgegangenen Ansprüche,
**dadurch gekennzeichnet, dass**
der Kalk in einem relativen Gewichtsverhältnis beigegeben wird, das weniger als etwa 10 % beträgt, und vorzugsweise zwischen 0,5 und 3 % des Gemisches aus Schlacke/Bitumenschaum liegt.

6. Verfahren nach einem der vorausgegangenen Ansprüche,
**dadurch gekennzeichnet, dass**
außerdem natürliche Granulate beigemischt werden, die aus der Gruppe ausgewählt werden, welche natürlichen Sand, zerkleinertes natürliches Gestein und zerkleinerte Betonabfälle umfasst, wobei diese Granulate in einem relativen Gewichtsverhältnis zwischen 0 und 90 %, und vorzugsweise zwischen 30 und 60 % beigemischt werden.

7. Verfahren nach einem der vorausgegangenen Ansprüche,
**dadurch gekennzeichnet, dass**
dem Gemisch zusätzliche Additive beigemischt werden, welche aus der Gruppe ausgewählt werden, die Dotierstoffe für die Haftung und Schaumbildner umfasst, die in einem relativen Gewichtsverhältnis von etwa 5 %, und vorzugsweise von weniger als etwa 2 % beigemischt werden.

8. Verfahren nach einem der vorausgegangenen Ansprüche,
**dadurch gekennzeichnet, dass**
die verwendete Schlacke (8) außerdem einer Enteisungsbehandlung unterzogen wird, die insbesondere durch magnetische Sortierung und/oder durch Siebung in einem Sieb durchgeführt wird, das eine Maschengröße hat, die kleiner als etwa 50 mm ist, und vorzugsweise bei etwa 30 mm liegt.

9. Verfahren nach einem der vorausgegangenen Ansprüche,
**dadurch gekennzeichnet, dass**
die Schlacke (8) vorzugsweise nach der Entfernung der Metalle etwa drei Monate gelagert wird, bevor sie in dem Gemisch eingesetzt wird.

**Claims**

1. Process for the treatment of clinker (8) for the purpose of rendering it inert and/or of improving its mechanical properties, by intimate mixing, in particular by kneading (12), of clinker (8), of bitumen and of a pulverulent additive chosen from quicklime and slaked lime, **characterized in that** the bitumen is added in the form of foamed bitumen, in order to form a foam-bound aggregate, and **in that** the clinker (8) is passed into an eddy-current separator, in order to remove the aluminium, prior to the use of the clinker in the mix.

2. Process according to Claim 1, **characterized in that** the bitumen used for the manufacture of the foamed bitumen is a pure or modified bitumen, optionally fluxed, from a coal oil or petroleum oil, with a grade ranging from 10/20 up to 180/220.

3. Process according to either of Claims 1 and 2, **characterized in that** the mix is prepared by incorporating foamed bitumen, the temperature of which is between 140 and 190°C, in clinker (8), the temperature of which is in the region of ambient temperature.

4. Process according to any one of the preceding claims, **characterized in that** the mix is prepared by employing the foamed bitumen in a relative proportion by weight of bitumen of between 2 and 9% and preferably of between 3 and 6% of the clinker/foamed bitumen mix.

5. Process according to any one of the preceding claims, **characterized in that** the lime is added in a relative proportion by weight of less than approximately 10% and preferably of between 0.5 and 3% of the clinker/foamed bitumen mix.

6. Process according to any one of the preceding claims, **characterized in that** natural aggregates chosen from the group comprising natural sand, crushed natural rocks and crushed demolition concrete are additionally added; these natural aggregates being added to the mix in a relative proportion by weight of between 0 and 90% and preferably of between 30 and 60%.

7.  Process according to any one of the preceding claims, **characterized in that** additional additives chosen from the group comprising adhesion agents and foaming agents are added to the mix, it being possible for these agents to be added up to a relative proportion by weight of approximately 5‰ and preferably of less than approximately 2‰.

8.  Process according to any one of the preceding claims, **characterized in that** the clinker (8) employed was additionally subjected to a treatment for the removal of pieces of iron, in particular by magnetic sorting, and/or a screening treatment in a sieve with a mesh size of less than approximately 50 mm and preferably in the region of 30 mm.

9.  Process according to any one of the preceding claims, **characterized in that** the clinker (8), preferably after treatment for removal of the metals, is stored for approximately three months before it is employed in the mix.

FIG.1

FIG.2

FIG.3